# EUROPÄISCHE PATENTSCHRIFT

(11) **EP 3 449 478 B1**
(45) Veröffentlichungstag und Bekanntmachung des Hinweises auf die Patenterteilung: **15.09.2021**
(21) Anmeldenummer: 17717385.3
(22) Anmeldetag: 11.04.2017
(51) Int. Cl.: H05B 45/50, H02H 3/02, F21V 25/12, F21Y 103/10, F21Y 115/10, H02H 3/05, H02H 3/087, H02H 3/20, F21V 25/02, H02H 9/00, H05B 45/48

(54) **MODUL ZUR BEREITSTELLUNG EINER EIGENSICHEREN ELEKTRISCHEN AUSGANGSLEISTUNG SOWIE EXPLOSIONSGESCHÜTZTE LEUCHTE**
MODULE FOR PROVIDING AN INTRINSICALLY SAFE ELECTRICAL OUTPUT POWER AND EXPLOSION-PROOF LUMINAIRE
MODULE DE FOURNITURE D'UNE PUISSANCE DE SORTIE ÉLECTRIQUE À SÉCURITÉ INTRINSÈQUE AINSI QUE DISPOSITIF D'ÉCLAIRAGE PROTÉGÉ CONTRE LES EXPLOSIONS

(30) Priorität: 13.04.2016 DE 102016106798
(43) Veröffentlichungstag der Anmeldung: 06.03.2019
(73) Patentinhaber: R. Stahl Schaltgeräte GmbH, 74638 Waldenburg (DE)
(72) Erfinder: GRIESBACH, Andreas, 99096 Erfurt (DE); STRITZELBERGER, Jörg, 74613 Öhringen (DE); PIPLACK, Stephan, Weimar 99423 (DE)
(74) Vertreter: Rüger Abel Patentanwälte PartGmbB
(86) Internationale Anmeldenummer: PCT/EP2017/058643
(87) Internationale Veröffentlichungsnummer: WO 2017/178470

(56) Entgegenhaltungen:
- EP-A1- 2 667 084
- EP-A2- 0 666 631
- WO-A2-2012/077013
- DE-U1-202008 006 282
- DE-U1-202008 006 282
- US-A- 5 404 282
- US-A1- 2008 100 976

## Beschreibung

Die Erfindung betrifft eine Anordnung aufweisend ein Modul zur Bereitstellung einer eigensicheren elektrischen Ausgangsleistung für wenigstens eine angeschlossene elektrische Last, insbesondere für eine oder mehrere Leuchtdioden einer Leuchte. Die Erfindung betrifft außerdem eine explosionsgeschützte Leuchte mit einer derartigen Anordnung.

In explosionsgefährdeten Umgebungen müssen elektrische Betriebsmittel explosionsgeschützt ausgeführt sein, wie es in der Normenreihe EN/IEC 60079 beschrieben ist. Beispielsweise müssen Leuchten mit Leuchtdioden der Zündschutzart "erhöhte Sicherheit" mit weiteren Zündschutzarten kombiniert werden, um ein vorgegebenes bzw. erforderliches Sicherheitsniveau (z.B. "EPL Gb") zu erreichen. Beispielsweise können die Leuchtdioden bzw. deren Betriebsschaltung in einem Gehäuse in der Zündschutzart "druckfeste Kapselung" (Ex-d) oder "Vergusskapselung" (Ex-m) angeordnet sein. Ausführungen des die elektrischen Betriebsmittel bzw. elektrische Lasten aufweisenden Gehäuses in einer Zündschutzart, beispielsweise Leuchtdioden, sind aufwendig und erschweren auch Reparatur und Wartung.

DE 101 32 415 A1 beschreibt eine Schutzeinrichtung für eine Spannungsverteilungsleitung, an die eigensichere Schaltungen angeschlossen werden. Die Spannung an der Spannungsverteilungsleitung wird überwacht und bei einem Spannungsanstieg oder einem Spannungsabfall über bzw. unter einen Schwellenwert wird ein in Reihe zu der Spannungsverteilungsleitung geschalteter Schalter geöffnet, um den Stromfluss durch die Spannungsverteilungsleitung zu unterbrechen, bevor an einer Trennstelle ein Funken eine Zündung einer explosionsgefährdeten Atmosphäre herbeiführen kann.

Aus WO 2015/047383 A1 ist ein Lichtbogenüberwachung beschrieben, bei der an jedem parallelgeschaltete Ausgangszweig einer Versorgungsleitung jeweils sowohl die Zweigspannung als auch der Zweigstrom überwacht werden. Außerdem werden die Versorgungsspannung und der Versorgungsstrom an der Versorgungsleitung überwacht. Wenn die Versorgungsspannung und sämtliche Zweigspannungen nicht gleich groß sind oder wenn der Versorgungsstrom nicht der Summe der Zweigströme entspricht, wird ein Sicherheitsschalter in der Versorgungsleitung geöffnet.

Es wurden auch verschiedene Versuche unternommen, die aufwendige Kapselung von elektrischen Lasten, wie etwa Leuchtdioden, zu vereinfachen. DE 10 2013 104 240 B4 schlägt beispielsweise vor, einen Träger, auf dem Leuchtdioden angeordnet sind, vorzugsweise werkzeuglos mit Rastverbindungsmitteln mit einem Abdeckkörper zu verbinden, so dass die Leuchtdioden in jeweils einer Kammer der Abdeckung aufgenommen sind. Zwischen dem Träger und dem Abdeckkörper wird ein zünddurchschlagsicherer Spalt gebildet, so dass die Leuchtdioden in Kammern mit kleinem Volumen explosionsgeschützt angeordnet ist.

EP 2 667 084 A1 offenbart eine elektrische Lampe mit einer LED. Die Lampe weist eine Strombegrenzungseinrichtung auf. Es wird keine Maßnahme betreffend die Eigensicherheit im Bezug auf die Ausgangssspannung ergriffen. Insbesondere sind keine Mittel zur Begrenzung der Ausgangsspannung vorhanden.

In US 2008/0100976 A1 ist ein eigensicheres System für explosionsgefährdete Atmosphären beschrieben. Über eine Einrichtung (enhancement device) kann ausgangsseitig der Einrichtung eine eigensichere elektrische Leistung bereitgestellt werden. Die Einrichtung weist einen Erfassungsschaltkreis auf, der eine Spannungserfassung und eine Stromerfassung enthält. Somit werden sowohl die Ausgangsspannung, als auch der Ausgangsstrom erfasst, um ausgangsseitig die Eigensicherheit herzustellen.

Der in DE 20 2008 006 282 U1 beschriebene LED-Strahler hat ein Speisegerät und eine LED-Leuchte. Zur Herstellung der Eigensicherheit sind in einem eigensicheren Stromkreis Stromregler hintereinander geschaltet. Die Spannungsregler werden über einen Transformator versorgt, der eine eigensichere Spannung bereitstellt. Somit wird ausgangsseitig des eigensicheren Stromkreises nach dem zweiten Stromregler sowohl die Spannung, als auch der Strom begrenzt, um eine eigensichere elektrische Leistung rauszugeben.

EP 0 666 631 A2 beschreibt ein Speisesystem für einen Feldbus. Der Feldbus ist ein nicht eigensicherer Stromkreis. Verteiler, die an den Feldbus angeschlossen sind, weisen Mittel zur Strombegrenzung an den Anschlüssen für eigensichere Stromkreise auf. Die Spannungsbegrenzung erfolgt über eine Komponente, die dem Verteiler vorgeschaltet ist.

Ausgehend vom bekannten Stand der Technik kann es als Aufgabe der vorliegenden Erfindung angesehen werden, wenigstens eine elektrische Last, insbesondere wenigstens eine Leuchtdiode einer Leuchte, ohne aufwendige mechanische Gehäusegestaltungen explosionssicher betreiben zu können.

Diese Aufgabe wird durch eine Anordnung aufweisend ein Modul und eine daran angeschlossene Last mit den Merkmalen des Patentanspruches 1 sowie eine Leuchte mit den Merkmalen des Patentanspruches 10 gelöst.

Die erfindungsgemäße Anordnung dient zur Bereitstellung einer eigensicheren elektrischen Ausgangsleistung (Ex-i) für eine elektrische Last, beispielsweise für wenigstens eine Leuchtdiode. An einem Eingang, der einen ersten Eingangsanschluss und einen zweiten Eingangsanschluss aufweist, kann durch eine nicht eigensichere Stromquelle oder eine Spannungsquelle eine Eingangsleistung bereitgestellt werden. Die Anordnung ist derart ausgebildet, dass aus der nicht eigensicheren Eingangsleistung mit einfachen Mitteln eine eigensichere Ausgangsleistung an einem Ausgang des Moduls für eine elektrische Last bereitgestellt wird.

Der Ausgang des Moduls weist einen ersten Ausgangsanschluss und einen zweiten Ausgangsanschluss auf. Zwischen den beiden Ausgangsanschlüssen des Ausgangs ist die elektrische Last der Anordnung angeschlossen.

Das Modul weist eine Stromüberwachungsschaltung auf, die den durch die Last fließenden Ausgangsstrom erfasst und mit einem Stromgrenzwert vergleicht.

Wenigstens ein ansteuerbarer Sicherheitsschalter ist vorhanden und kann bei einer Ausführungsform in der elektrischen Verbindung zwischen einem der beiden Eingangsanschlüsse und den Ausgängen angeordnet sein. Alternativ oder zusätzlich kann ein vorhandener Sicherheitsschalter parallel zu einem oder mehreren zugeordneten Ausgängen des Moduls angeordnet sein, um den Ausgang oder die Ausgänge niederohmig zu verbinden oder kurzzuschließen und einen Stromfluss durch die angeschlossene Last sowie die Spannung an dem wenigstens einen zugeordneten Ausgang zu reduzieren. Der Sicherheitsschalter kann eine elektrische Verbindung abhängig von seinem Schaltzustand unterbrechen bzw. sperren oder die elektrische Verbindung herstellen, wenn er sich in seinem leitenden Zustand befindet. Der Sicherheitsschalter wird durch wenigstens eine Ansteuerschaltung angesteuert und entweder in den sperrenden oder den leitenden Zustand geschaltet. Die Ansteuerschaltung ist mit der Stromüberwachungsschaltung verbunden.

Wird festgestellt, dass ein Ausgangsstrom den Stromgrenzwert überschreitet, veranlasst die Ansteuerschaltung das Umschalten des Sicherheitsschalters in einen Sicherheitszustand. Im Sicherheitszustand sorgt der Sicherheitsschalter dafür, dass der Ausgangsstrom am Ausgang auf jeweils einen eigensicheren Wert reduziert ist. Beispielsweise kann der Stromfluss des Eingangsstroms in einen Eingangsanschluss bzw. aus dem anderen Eingangsanschluss zurück zur Stromquelle oder Spannungsquelle unterbunden werden, wenn ein in der elektrischen Verbindung zwischen einem der beiden Eingangsanschlüsse und den Ausgängen angeordneter Sicherheitsschalter in seinem Sicherheitszustand sperrt. Dadurch wird die Ausgangsleistung sofort auf Null reduziert. Kapazitive Bauelemente, die sich nach dem Öffnen des Sicherheitsschalters über eine oder mehrere der Lasten entladen, sind vorzugsweise nicht vorhanden.

Ist der Sicherheitsschalter parallel zu einem oder mehreren zugeordneten Ausgängen des Moduls angeordnet, ist er im Sicherheitszustand leitend und verbindet die Ausgangsanschlüsse des wenigstens einen zugeordneten Ausgangs niederohmig bzw. schließt diese kurz.

Unter einer niederohmigen Verbindung mittels des Sicherheitsschalters ist eine Verbindung zu verstehen, bei der am Sicherheitsschalter lediglich eine Restspannung von einigen Volt oder weniger anliegt, vorzugsweise von weniger als 2 bis 3 V. Die Restspannung hängt davon ab, wie der Sicherheitsschalter ausgestaltet ist. Vorzugsweise wird als Sicherheitsschalter ein Halbleiterschalter bzw. eine Halbleiteranordnung mit mehreren Halbleiterbauelementen verwendet. Wenn der Sicherheitsschalter beispielsweise ein Triac oder ein Thyristor ist, kann die Restspannung etwa 2 V betragen. Bei einem Bipolar-Transistor ist die Restspannung vorzugsweise kleiner als 1 V. Bei einem Isolierschichtfeldeffekttransistor kann die Restspannung beispielsweise 0,5 V oder weniger betragen. Die genaue Restspannung hängt vom Typ des verwendeten Halbleiters ab. Die Restspannung ist definiert als die Spannung, die bei vollständig gesättigtem bzw. voll durchgesteuerten Halbleiterschalter noch am Halbleiterschalter anliegt.

Bei einer nicht erfindungsgemäßen Ausführung können mehrere Ausgänge vorhanden und parallel geschaltet sein. Dadurch kann der am Eingang anliegende Strom auf mehrere Ausgänge verteilt werden und reduziert sich dadurch. Dies ist insbesondere dann zweckmäßig, wenn das Modul an eine Spannungsquelle angeschlossen wird, bei der die Eingangsspannung bekannt ist und der Eingangsstrom abhängig von einer durch die Spannungsquelle bereitstellbaren maximalen Eingangsleistung variieren kann. Aufgrund der Parallelschaltung der Ausgänge liegt an jedem Ausgang dieselbe Ausgangsspannung an, die im Wesentlichen der Eingangsspannung entspricht. Der Ausgangsstrom wird durch sämtliche an den Ausgängen angeschlossene Lasten bestimmt.

Bei einer anderen nicht erfindungsgemäßen Ausführung sind mehrere Ausgänge in Reihe zueinander geschaltet. Dies ist insbesondere dann vorteilhaft, wenn an den Eingang eine Stromquelle angeschlossen wird. Der durch die Stromquelle vorgegebene Eingangsstrom fließt dann durch sämtliche in Reihe geschalteten Ausgänge über die jeweils angeschlossene Last. Die zwischen den beiden Eingangsanschlüssen anliegende Eingangsspannung, die abhängig von einer durch die Stromquelle bereitstellbaren maximalen Eingangsleistung variieren kann, verteilt sich entsprechend der Lasten auf die in Reihe geschalteten Ausgänge und wird dadurch reduziert.

Mit Hilfe des Moduls wird der wenigstens eine Ausgang durch Überwachung des Ausgangsstromes auf Einhaltung der eigensicheren Ausgangsleistung überwacht und bei Überschreiten eines Stromgrenzwertes wird die Ausgangsleistung am Ausgang abgeschaltet. Dadurch kann auch die optische Strahlung von Leuchtdioden beschränkt werden, selbst wenn aufgrund eines Fehlers die Eingangsleistung zu groß wird.

Die Leuchtdioden bzw. elektrischen Lasten müssen erfindungsgemäß nicht zusätzlich durch mechanische Mittel explosionsgeschützt werden, beispielsweise durch eine "druckfeste Kapselung" oder durch eine "Vergusskapselung". Dadurch wird das Ausführen einer explosionsgeschützten elektrischen Einrichtung, wie etwa einer explosionsgeschützten Leuchte, wesentlich vereinfacht. Es ist auch möglich, das Gehäuse einer solchen Leuchte oder Einrichtung nicht explosionsgeschützt auszuführen, wenn das Modul und dessen Eingangsklemmen explosionsgeschützt ausgeführt ist, beispielsweise als separate Baueinheit oder innerhalb des Gehäuses. In allen Fällen sind zumindest die Lasten sehr einfach zugänglich und können mit wenig Aufwand geprüft, repariert oder ersetzt werden.

Dem Ausgang ist eine Stromüberwachungsschaltung zugeordnet, die redundant ausgeführt sein kann.

Bei einem bevorzugten Ausführungsbeispiel sind zwei in Reihe geschaltete separate Sicherheitsschalter vorhanden. Vorzugsweise wird jeder Sicherheitsschalter durch eine separate Ansteuerschaltung angesteuert. Jede Ansteuerschaltung ist mit jeweils einer Stromüberwachungsschaltung für jeden der vorhandenen Ausgänge verbunden. Dadurch wird die Betriebssicherheit weiter verbessert.

Die wenigstens eine Ansteuerschaltung weist bei einem Ausführungsbeispiel eine Sicherung, vorzugsweise eine Schmelzsicherung auf. Überschreitet der Strom den Stromgrenzwert und/oder überschreitet eine Spannung den Spannungsgrenzwert, verursacht die Ansteuerschaltung ein Auslösen der Sicherung, so dass diese sperrt bzw. einen Stromfluss durch die Sicherung unterbindet. Vorzugsweise ist die Sicherung mit dem Steueranschluss des wenigstens einen Sicherheitsschalters verbunden und führt durch die Unterbrechung des Stromflusses durch die Sicherung dazu, dass der Sicherheitsschalter in seinen sperrenden Zustand umschaltet.

Vorzugsweise ist der Sicherheitsschalter durch wenigstens einen Halbleiterschalter gebildet oder weist wenigstens einen Halbleiterschalter auf, beispielsweise einen Feldeffekttransistor, einen Bipolartransistor, einen Triac oder einen Thyristor. Der Feldeffekttransistor kann als p-Kanal-MOSFET oder als n-Kanal-MOSFET ausgeführt sein.

Es ist bevorzugt, wenn an dem Ausgang mehrere Leuchtdioden angeschlossen sind, die die elektrische Last am Ausgang bilden.

Erfindungsgemäß weist das Modul einen Ausgang auf, an dem die Last mit mehreren parallelen Zweigen und jeweils mehreren Bauelementen, beispielsweise mehreren Leuchtdioden, angeschlossen ist. Die Bauelemente sind in jedem Zweig in Reihe geschaltet, so dass sich insgesamt eine matrixförmige Anordnung der Bauelemente bzw. Leuchtdioden ergibt. Bei einem solchen Ausführungsbeispiel ist keine Spannungsüberwachungseinrichtung des betreffenden Ausgangs vorhanden. Diesem Ausgang ist vorzugsweise nur wenigstens eine Stromüberwachungsschaltung zur Überwachung des betreffenden Ausgangsstromes zugeordnet. Die Ausgangsspannung wird durch die in Reihe geschalteten Bauelemente in jedem Zweig aufgeteilt. Bei Ausfall eines Zweiges wird die Ausgangsspannung durch den wenigstens einen parallel dazu geschalteten Zweig aufgenommen und ebenfalls auf die dort in Reihe geschalteten Bauteile bzw. Leuchtdioden aufgeteilt. Bei dieser Ausgestaltung entfällt eine Spannungsüberwachung des Ausgangs.

Die vorstehend beschriebene Anordnung kann Bestandteil einer explosionsgeschützten Leuchte sein. Die an das Modul angeschlossenen Leuchtdioden der Leuchte können einfach ohne zusätzliche Explosionsschutzmaßnahmen des Leuchtengehäuses angeordnet werden. Insbesondere kann eine "Vergusskapselung" oder eine "druckfeste Kapselung" oder andere Explosionschutzmaßnahmen an den Leuchtdioden entfallen.

Vorteilhafte Ausgestaltungen der Erfindung ergeben sich aus den abhängigen Patentansprüchen, der Beschreibung und der Zeichnung. Nachfolgend werden Ausführungsbeispiele der Erfindung anhand der beigefügten Zeichnungen im Einzelnen erläutert. Es zeigen:
Figur 1 ein Blockschaltbild eines nicht erfindungsgemäßen Beispiels eines Moduls,
Figur 2 ein Blockschaltbild eines nicht erfindungsgemäßen Beispiels eines Moduls,
Figur 3 einen Schaltplan eines nicht erfindungsgemäßen Beispiels eines Moduls und
Figur 4 einen Schaltplan eines nicht erfindungsgemäßen weiteren Beispiels eines Moduls,
Figur 5 eine perspektivische Darstellung einer beispielhaften explosionsgeschützten Leuchte und
Figur 6 einen Schaltplan eines Ausführungsbeispiels eines erfindungsgemäßen Moduls.

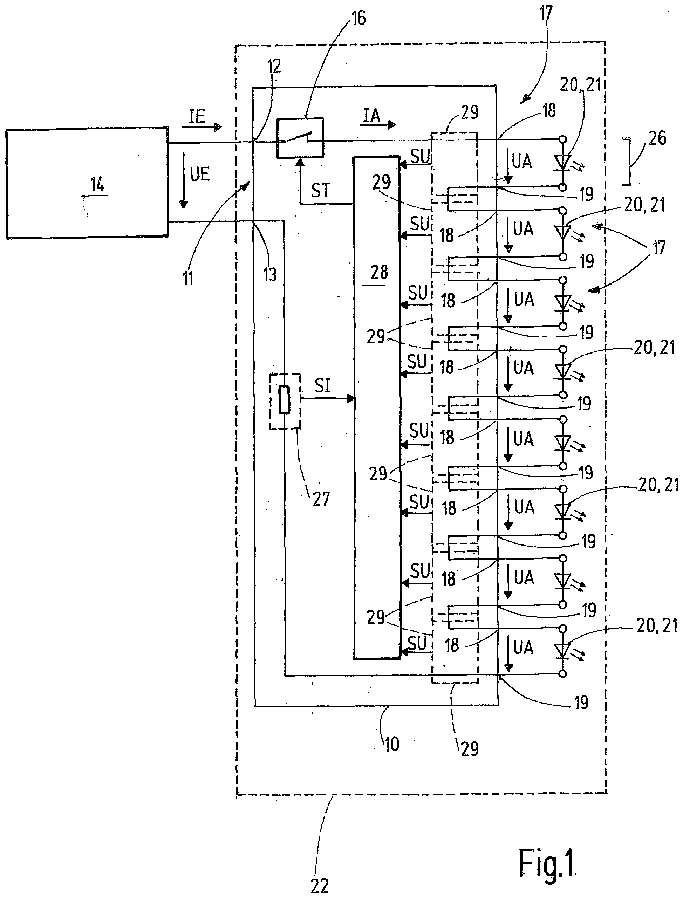

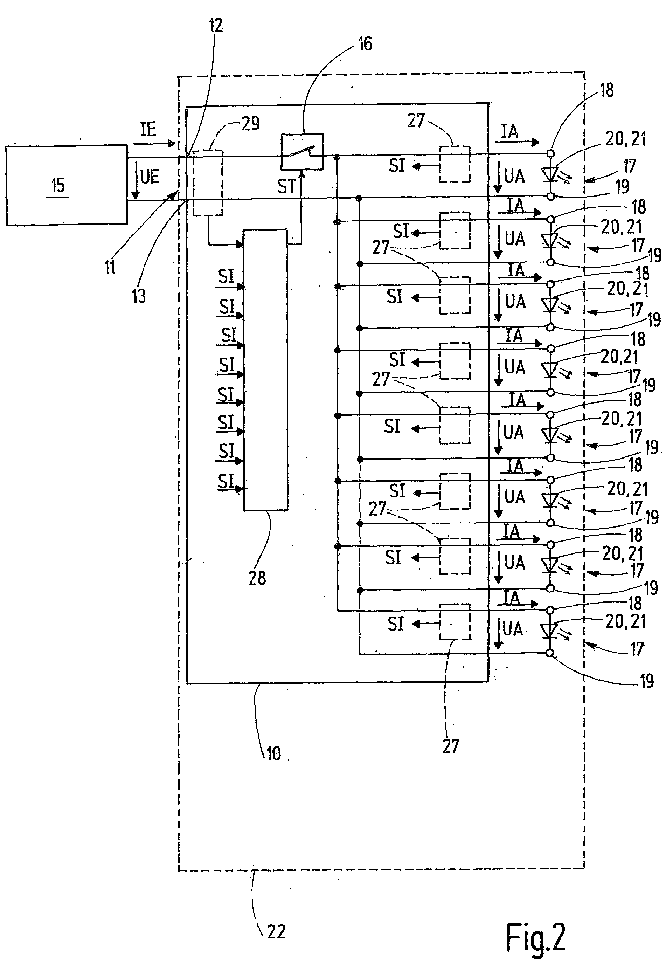

In Figur 1 ist ein Blockschaltbild eines ersten Beispiels eines Moduls 10 schematisch veranschaulicht. Das Modul 10 weist einen Eingang 11 mit einem ersten Eingangsanschluss 12 und einem zweiten Eingangsanschluss 13 auf. An den Eingang 11 ist eine nicht eigensichere Energiequelle in Form einer Stromquelle 14 oder einer Spannungsquelle 15 (Figur 2) anschließbar. Beim Beispiel nach Figur 1 ist das Modul 10 insbesondere dazu vorgesehen, an eine Stromquelle 14 angeschlossen zu werden. In den ersten Eingangsanschluss 12 fließt ein Eingangsstrom IE, der beispielsgemäß durch die Stromquelle 14 eingeprägt ist. Zwischen den Eingangsanschlüssen 12, 13 liegt eine Eingangsspannung UE an, die bei der Stromquelle 14 lastabhängig variieren kann.

Mit dem ersten Eingangsanschluss 12 oder alternativ dem zweiten Eingangsanschluss 13 ist ein ansteuerbarer Sicherheitsschalter 16 verbunden. Das Modul 10 weist wenigstens einen Ausgang 17 auf. Der Sicherheitsschalter 16 ist in einer elektrischen Verbindung zwischen einem der Eingangsanschlüsse 12, 13 und einem der vorhandenen Ausgänge 17 des Moduls 10 angeordnet und kann in seinem leitenden Zustand eine elektrisch leitende Verbindung ermöglichen und in seinem sperrenden Zustand unterbrechen.

Jeder vorhandene Ausgang 17 des Moduls 10 hat einen ersten Ausgangsanschluss 18 und einen zweiten Ausgangsanschluss 19. Zwischen den beiden Ausgangsanschlüssen 18, 19 eines Ausgangs 17 liegt eine Ausgangsspannung UA an. Zwischen die beiden Ausgangsanschlüsse 18, 19 jedes Ausgangs 17 ist eine elektrische Last 20 anschließbar. Die elektrische Last 20 ist bei den hier beschriebenen Ausführungsbeispielen jeweils durch mehrere in Reihe und parallel geschaltete Leuchtdioden 21 gebildet.

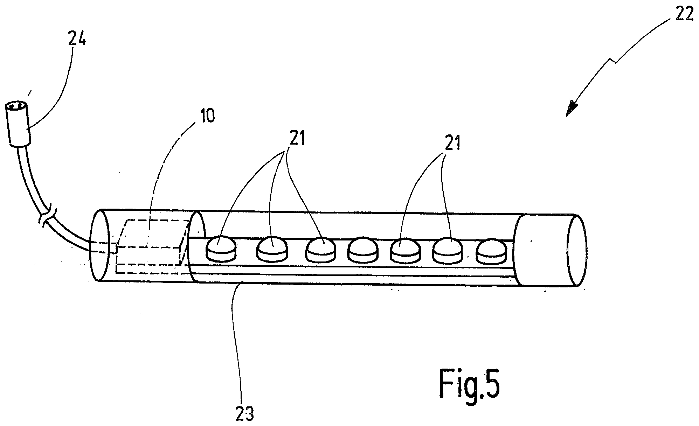

Das Modul 10 und die an die Ausgänge angeschlossenen Leuchtdioden 21 sind beispielsweise Bestandteil einer explosionsgeschützten Leuchte 22. Ein Ausführungsbeispiel einer solchen Leuchte 22 ist in Figur 5 veranschaulicht. Die Leuchte 22 hat ein Leuchtengehäuse 23, in dem die Leuchtdioden 21 und beispielsgemäß auch das Modul 10 angeordnet sind, beispielsweise auf einem gemeinsamen Träger bzw. einer gemeinsamen Leiterplatte. Das Leuchtengehäuse 23 muss nicht in einer Zündschutzart ausgeführt sein, wenn das Modul selbst entsprechend explosionsgeschützt ausgeführt ist oder als externe explosionsgeschützte Einheit außerhalb des Leuchtengehäuses 23 angeordnet ist. Mittels eines Anschlusssteckers 24 kann das Modul 10 mit seinem Eingang 11 an eine Strom- oder Spannungsquelle angeschlossen werden. Das Modul 10 kann auch in einem separaten Gehäuse als anschließbares oder ansteckbares Verbindungsmodul mit der Leuchte 22 mechanisch und elektrisch verbunden werden und zwischen die Strom- oder Spannungsquelle und die Leuchtdioden 21 der Leuchte 22 geschaltet sein.

Bei dem in Figur 1 dargestellten Beispiel sind mehrere Ausgänge 17 vorhanden, die über die jeweils elektrische Last 20 bzw. die wenigstens eine Leuchtdiode 21 an jedem Ausgang 17 in Reihe geschaltet sind. Der erste Ausgangsanschluss 18 des ersten Ausgangs 17 ist mit dem Sicherheitsschalter 16 verbunden. Der zweite Ausgangsanschluss 19 des ersten Ausgangs 17 ist mit dem ersten Ausgangsanschluss 18 des in der Reihenschaltung nächsten Ausgangs 17 verbunden, usw. Der zweite Ausgangsanschluss 19 des letzten Ausgangs 17 der Reihenschaltung der Ausgänge 17 ist mit dem zweiten Eingangsanschluss 13 verbunden.

Das Modul 10 nach Figur 1 stellt eine vorgegebene Anzahl von Ausgängen 17 bereit. Sollte nicht an jedem Ausgang 17 eine elektrische Last 20 bzw. eine oder mehrere Leuchtdioden 21 angeschlossen sein, wird der betreffende Ausgang 17 durch ein Überbrückungselement 26 leitend verbunden bzw. kurzgeschlossen. Dadurch wird sichergestellt, dass die Reihenschaltung der Ausgänge 17 durch eine fehlende elektrische Last 20 nicht unterbrochen wird. Wird eine elektrische Last 20 durch ein Überbrückungselement 26 ersetzt, ist die Ausgangsspannung UA an dem betreffenden Ausgang 17 gleich Null.

Aufgrund der Reihenschaltung der Ausgänge 17 fließt durch sämtliche elektrische Lasten 20 derselbe Ausgangsstrom IA. Der Ausgangsstrom IA entspricht beispielsgemäß dem Eingangsstrom IE, der beim Anschluss einer Stromquelle 14 an das Modul 10 bzw. die Leuchte 22 eingeprägt ist.

Das Modul 10 weist wenigstens eine Stromüberwachungsschaltung 27 auf. Beim Beispiel nach Figur 1 ist eine einzige Stromüberwachungsschaltung 27 ausreichend, da der Strom durch sämtliche elektrische Lasten 20 bzw. durch sämtliche Ausgänge 17 gleich groß ist. Beispielsgemäß befindet sich die Stromüberwachungsschaltung 27 in der elektrischen Verbindung zwischen dem letzten Ausgang 17 der Reihenschaltung von Ausgängen 17 und dem zweiten Eingangsanschluss 13. Die Stromüberwachungsschaltung 27 könnte auch an jeder anderen Stelle zwischen dem ersten Eingangsanschluss 12 und dem zweiten Eingangsanschluss 13 im Modul 10 angeordnet sein. Die Stromüberwachungsschaltung 27 erzeugt ein Stromüberwachungssignal SI. Das Stromüberwachungssignal SI zeigt an, ob der Ausgangsstrom IA einen Stromgrenzwert überschreitet oder nicht. Das Stromüberwachungssignal SI wird einer Ansteuerschaltung 28 übermittelt, die den ansteuerbaren Sicherheitsschalter 16 über ein Ansteuersignal ST ansteuert.

Das Modul 10 weist außerdem wenigstens eine Spannungsüberwachungsschaltung 29 auf. Die Spannungsüberwachungsschaltung überwacht jeweils eine Ausgangsspannung UA. Beim Beispiel nach Figur 1 ist jedem Ausgang 17 eine separate Spannungsüberwachungsschaltung 29 zugeordnet, da die Ausgangsspannungen UA an den Ausgängen 17 voneinander abweichen können. Jede Spannungsüberwachungsschaltung 29 erzeugt ein Spannungsüberwachungssignal SU, die alle der Ansteuerschaltung 28 übermittelt werden. Das Spannungsüberwachungssignal SU zeigt an, ob die von der Spannungsüberwachungsschaltung 29 überwachte Ausgangsspannung UA einen Spannungsgrenzwert überschreitet oder nicht.

Solange sämtliche Ausgangsspannungen UA unterhalb des Spannungsgrenzwertes liegen und der Ausgangsstrom IA unterhalb des Stromgrenzwertes liegt, bleibt der Sicherheitsschalter 16 beispielsgemäß in seinem leitenden Zustand.

Sobald eine der Ausgangsspannungen UA einen vorgegebenen Spannungsgrenzwert überschreitet oder der Ausgangsstrom IA den Stromgrenzwert überschreitet, steuert die Ansteuerschaltung 28 den Sicherheitsschalter 16 über das Ansteuersignal ST an und schaltet diesen in den Sicherheitszustand und beispielsgemäß in den sperrenden Zustand um. Der Ausgangsstrom IA durch die elektrischen Lasten 20 wird dadurch unterbunden und ein sicherer Zustand des Moduls 10 bzw. der Leuchte 22 hergestellt.

Leuchtdioden 21 werden in der Regel durch eine Stromquelle 14 betrieben. Die Stromquelle 14 liefert am Eingang 11 eine nicht eigensichere elektrische Leistung, die durch den Eingangsstrom IE und die Eingangsspannung UE definiert ist. Insbesondere die Eingangsspannung UE kann bei der Stromquelle 14 groß werden, wodurch die Eingangsleistung entsprechend ansteigt. Die Eingangsspannung UE wird aufgrund der Reihenschaltung der Ausgänge 17 proportional zur jeweils angeschlossenen elektrischen Last 20 auf die Ausgänge 17 verteilt. Ist an jeden Ausgang 17 dieselbe Last 20 bzw. dieselbe Leuchtdiodenschaltung aus wenigstens einer Leuchtdiode 21 angeschlossen, sind die Ausgangsspannungen UA an den Ausgängen 17 im Wesentlichen gleich groß.

Die Eingangsspannung UE wird beispielsgemäß zumindest näherungsweise gleichmäßig auf die Ausgänge 17 verteilt, wenn mehrere Ausgänge 17 vorhanden sind. Dadurch wird auf einfache Weise die Begrenzung der elektrischen Leistung durch die Begrenzung des Ausgangsstromes IA und die Begrenzung der Ausgangsspannung UA an jedem einzelnen Ausgang 17 erreicht. Die von der Stromquelle 14 bereitstellbare maximale Eingangsspannung UE bzw. Eingangsleistung ist bekannt. Durch die Mehrzahl von Ausgängen 17 kann diese maximal verfügbare Eingangsspannung UE auf die Ausgänge 17 aufgeteilt werden.

Zur weiteren Herstellung der Eigensicherheit des Moduls 10 bzw. der Leuchte 22 können sämtliche Ausgänge 17 bzw. sämtliche Ausgangsspannungen UA an den Ausgängen 17 sowie der durch jede Last 20 fließende Ausgangsstrom IA überwacht werden. Bei einer Grenzwertüberschreitung wird der Stromfluss im Modul 10 und durch die jeweils angeschlossene Last 20 sofort unterbrochen.

In Figur 2 ist ein weiteres Beispiel des Moduls 10 bzw. der Leuchte 22 veranschaulicht. Nachfolgend werden lediglich die Unterschiede zum Beispiel gemäß Figur 1 erläutert. Im Übrigen wird auf die vorstehende Erläuterung verwiesen.

Beim Beispiel nach Figur 2 sind mehrere Ausgänge 17 vorhanden, die parallel zueinander zwischen den ersten Eingangsanschluss 12 und den zweiten Eingangsanschluss 13 geschaltet sind. An jedem Ausgang 17 liegt somit dieselbe Ausgangsspannung UA an. Allerdings können sich die Ausgangsströme IA zwischen den Ausgängen 17 voneinander unterscheiden. Im Unterschied zum Beispiel nach Figur 1 ist daher beim Beispiel nach Figur 2 jedem Ausgang 17 eine separate Stromüberwachungsschaltung 27 zugeordnet. Jede Stromüberwachungsschaltung 27 eines Ausgangs 17 übermittelt ein Stromüberwachungssignal SI an die Ansteuerschaltung 28. Da alle Ausgangsspannungen UA der parallel geschalteten Ausgänge 17 gleich groß sind, ist eine einzige Spannungsüberwachungsschaltung 29 für sämtliche Ausgänge 17 ausreichend. In Abwandlung zur Darstellung nach Figur 2 kann die Spannungsüberwachungsschaltung 29 auch zwischen dem Sicherheitsschalter 16 und den Ausgängen 17 angeordnet oder einem beliebigen Ausgang 17 zugeordnet sein. Beim Beispiel nach Figur 2 ist die Spannungsüberwachungsschaltung 29 unmittelbar mit dem Eingang 11 verbunden.

Das Beispiel gemäß Figur 2 eignet sich insbesondere für Module 10 bzw. Leuchten 22, die über eine Spannungsquelle 15 betrieben werden, so dass die Ausgangsspannung UA in dem Ausgang 17 der eingeprägten Eingangsspannung UE entspricht. Der variable Eingangsstrom IE teilt sich bei einem Beispiel mit mehreren Ausgängen 17 entsprechend der Anzahl der Ausgänge 17 auf. Die Summe sämtlicher Ausgangsströme IA entspricht dem Eingangsstrom IE. Analog zum Beispiel nach Figur 1 kann dadurch die Ausgangsleistung an jedem Ausgang 17 abhängig vom maximal bereitgestellten Eingangsstrom IE begrenzt werden. Die Anzahl der Ausgänge 17 kann entsprechend gewählt werden.

Wie beim Beispiel nach Figur 1, wird der Sicherheitsschalter 16 über die Ansteuerschaltung 28 in seinen Sicherheitszustand (beispielsgemäß der sperrende Zustand) umgeschaltet, wenn entweder einer der Ausgangsströme IA den Stromgrenzwert überschreitet oder wenn die Ausgangsspannung UA bzw. die Eingangsspannung UE einen Spannungsgrenzwert überschreitet.

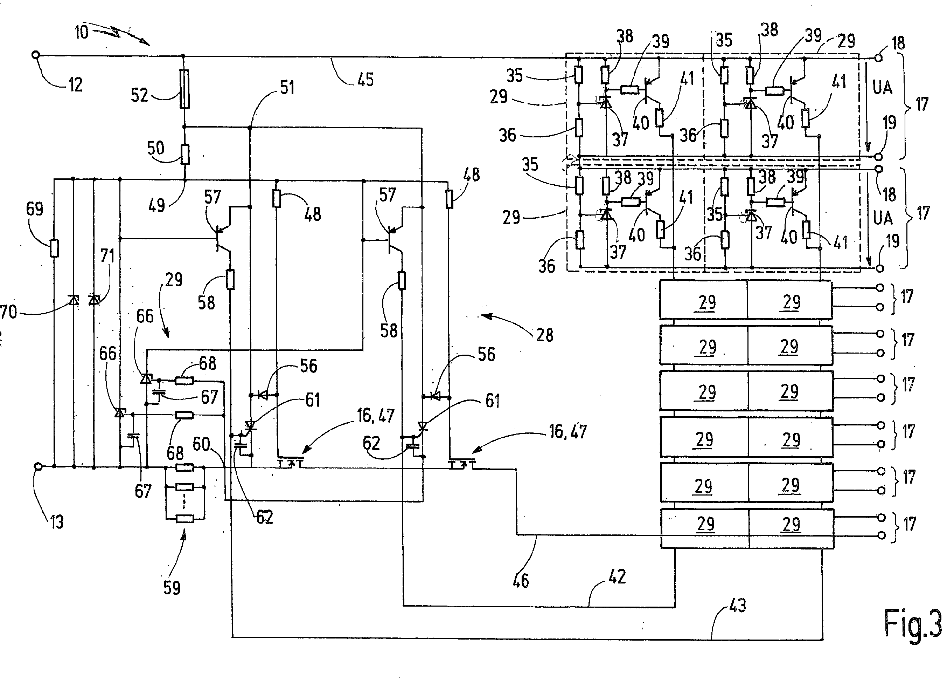

In Figur 3 ist ein Beispiel zur Realisierung eines Moduls 10 veranschaulicht. Dieses Modul 10 kann Bestandteil einer explosionsgeschützten Leuchte 22 sein oder als Anbaumodul mit separatem Gehäuse bereitgestellt werden. An mehrere oder alle Ausgänge 17 kann jeweils eine Leuchtdiodenschaltung mit jeweils wenigstens einer Leuchtdiode 21 angeschlossen sein. Bei dem Beispiel nach Figur 3 sind die Ausgänge 17 in Reihe geschaltet. Anstelle einer Last an einem Ausgang 17 kann auch ein Überbrückungselement 26 angeschlossen werden. Die sicherheitskritischen Bestandteile des Moduls 10 sind redundant vorgesehen.

Die jedem Ausgang 17 zugeordnete Spannungsüberwachungsschaltung 29 weist einen Spannungsteiler aus einem ersten Spannungsteilerwiderstand 35 und einem zweiten Spannungsteilerwiderstand 36 auf, die in Reihe zueinander zwischen den ersten Ausgangsanschluss 18 und den zweiten Ausgangsanschluss 19 eines Ausgangs 17 geschaltet sind. Der Mittenabgriff zwischen den Spannungsteilerwiderständen 35, 36 ist mit einem Steuereingang einer steuerbaren ersten Zenerdiode 37 verbunden. Die Kathode der ersten Zenerdiode 37 ist über einen ersten Widerstand 38 mit dem ersten Ausgangsanschluss 18 verbunden und die Anode der ersten Zenerdiode 37 ist mit dem zweiten Ausgangsanschluss 19 verbunden. Die Kathode der ersten Zenerdiode 37 ist außerdem über einen zweiten Widerstand 39 mit der Basis eines ersten Transistors 40 verbunden. Der erste Transistor 40 ist als bipolarer pnp-Transistor ausgeführt. Der Emitteranschluss des ersten Transistors 40 ist mit dem ersten Ausgangsanschluss 18 und der Kollektoranschluss des ersten Transistors 40 ist über einen dritten Widerstand 41 mit einer Steuerleitung 42 oder 43 verbunden.

Aus Gründen der Redundanz ist demselben Ausgang 17 eine weitere Spannungsüberwachungsschaltung 29 mit demselben Aufbau zugeordnet. Beispielsgemäß sind jedem Ausgang 17 also zwei Spannungsüberwachungsschaltungen 29 mit jeweils identischem Aufbau zugeordnet. Die eine Spannungsüberwachungsschaltung 29 ist mit einer ersten Steuerleitung 42 und die jeweils andere Spannungsüberwachungsschaltung 29 mit einer zweiten Steuerleitung 43 verbunden. In Figur 3 sind beispielhaft die Spannungsüberwachungsschaltungen 29 für die ersten beiden Ausgänge 27 veranschaulicht, während die übrigen Spannungsüberwachungsschaltungen 29 denselben Aufbau haben und lediglich durch Blockschaltbilder symbolisiert sind.

Beim Beispiel ist der erste Eingangsanschluss 12 direkt mit dem ersten Ausgangsanschluss 18 des ersten Ausgangs 17 über eine erste Verbindungsleitung 45 verbunden. Eine zweite Verbindungsleitung 46 ist mit dem zweiten Eingangsanschluss 13 verbunden. Zwischen die beiden Verbindungsleitungen 45, 46 ist die Reihenschaltung der Ausgänge 17 zwischengeschaltet. In der zweiten Verbindungsleitung 46 sitzt der wenigstens eine Sicherheitsschalter 16, der beispielsgemäß durch einen Transistor und hier durch einen Feldeffekttransistor 47 in Form eines n-Kanal-MOSFETs ausgeführt ist. Die Sicherheitsschalter 16 sind redundant ausgeführt, so dass im vorliegenden Beispiel zwei Sicherheitsschalter 16 in Reihe zueinander in der zweiten Versorgungsleitung 46 angeordnet sind.

Der Steueranschluss des Sicherheitsschalters 16 bzw. das Gate des Feldeffekttransistors 47 ist über einen vierten Widerstand 48 mit einem ersten Knoten 49 verbunden. Der erste Knoten 49 ist über einen fünften Widerstand 50 mit einem zweiten Knoten 51 verbunden. Der zweite Knoten 51 ist über eine Sicherung 52 mit der ersten Verbindungsleitung 45 bzw. dem ersten Eingangsanschluss 12 verbunden. Die Sicherung 52 ist beispielsgemäß als Schmelzsicherung ausgeführt.

Das Gate des Feldeffekttransistors 47 ist über eine erste Diode 56 mit dem zweiten Knoten 51 verbunden. Der Emitter eines zweiten Transistors 57, der als pnp-Bipolartransistor ausgeführt ist, ist mit dem zweiten Knoten 51 verbunden. Der Kollektor des zweiten Transistors 57 ist über einen sechsten Widerstand 58 mit der zweiten Steuerleitung 42 verbunden. Die Basis des zweiten Transistors 57 ist mit dem ersten Knoten 49 verbunden.

Der zweite Eingangsanschluss 13 ist über eine Widerstandsanordnung 59 mit einem dritten Knoten 60 verbunden. Die Widerstandsanordnung 59 weist einen oder mehrere parallel geschaltete Widerstände auf. Die an der Widerstandsanordnung 59 anliegende Spannung ist charakteristisch für den vom ersten Eingangsanschluss 12 zum zweiten Eingangsanschluss 13 fließenden Strom, der beim vorliegenden Beispiel dem Eingangsstrom IE sowie dem Ausgangsstrom IA entspricht, da sämtliche Ausgänge 17 in Reihe zwischen den beiden Eingangsanschlüssen 12, 13 angeordnet sind. Die Widerstandsanordnung 59 bildet somit einen Strommesswiderstand.

Der zweite Knoten 51 ist über einen ersten Thyristor 61 mit dem dritten Knoten 60 verbunden. Der Steuereingang des ersten Thyristors 61 ist mit der ersten Steuerleitung 42 verbunden. Ein erster Stützkondensator 62 ist einerseits mit der Kathode des ersten Thyristors 66 und dem dritten Knoten 60 und andererseits mit dem Steuereingang des ersten Thyristors 61 verbunden.

Eine steuerbare zweite Zenerdiode 66 verbindet den zweiten Eingangsanschluss 13 mit dem ersten Knoten 49, wobei die Kathode dem ersten Knoten 49 zugeordnet ist. Ein zweiter Stützkondensator 67 ist zwischen den Steueranschluss der zweiten Zenerdiode 66 und die Anode der zweiten Zenerdiode 66 geschaltet. Der Steueranschluss der steuerbaren zweiten Zenerdiode 66 ist über einen siebten Widerstand 68 mit dem dritten Knoten 60 verbunden.

Die vorstehend beschriebene Schaltung zwischen dem ersten Knoten 49, dem dritten Knoten 60 und der ersten Steuerleitung 42 bildet die Ansteuerschaltung 28 für einen der beiden Feldeffekttransistoren 47. Für den jeweils anderen Feldeffekttransistor 47 ist dieselbe Ansteuerschaltung 28 nochmals vorhanden, die im Unterschied zur vorherbeschriebenen Ansteuerschaltung 28 mit der zweiten Steuerleitung 43 verbunden ist.

Die Stromüberwachungsschaltung 27 ist redundant vorhanden und jeweils durch die Widerstandsanordnung 59 sowie die zweite Zenerdiode 66 mit dem zweiten Stützkondensator 67 und dem siebten Widerstand 68 gebildet.

Wie in Figur 3 veranschaulicht ist, ist zwischen dem ersten Knoten 49 und dem zweiten Eingangsanschluss 13 eine Parallelschaltung vorhanden, die einen achten Widerstand 69, eine dritte Zenerdiode 70 sowie eine vierte Zenerdiode 71 enthält. Die Kathoden der Zenerdioden 70, 71 sind mit dem ersten Knoten 49 verbunden.

Das insoweit beschriebene Modul 10 gemäß Figur 3 arbeitet wie folgt:

Solange weder ein Spannungsgrenzwert, noch ein Stromgrenzwert überschritten werden, bleibt der Feldeffekttransistor 47 durch die Verbindung seines Gates über den ersten Knoten 49, den zweiten Knoten 51 und die Sicherung 52 mit dem ersten Eingangsanschluss 12 in seinem leitenden Zustand. Der jeweilige erste Transistor 40 jeder Spannungsüberwachungsschaltung 29 sperrt und der zweite Transistor 57 der Ansteuerschaltung 28 sperrt ebenso.

Wenn eine Ausgangsspannung UA an einem der Ausgänge 17 einen durch die steuerbare erste Zenerdiode 37 vorgegebenen Spannungsgrenzwert überschreitet, wird die steuerbare erste Zenerdiode 37 über die am zweiten Spannungsteilerwiderstand 36 anliegende Spannung leitend, so dass die Basis des ersten Transistors 40 über den jeweiligen zweiten Widerstand 39 mit dem zweiten Ausgangsanschluss 19 verbunden wird. Dadurch wird der erste Transistor 40 leitend und verbindet die betreffende Steuerleitung 42 bzw. 43 mit dem zugeordneten ersten Ausgangsanschluss 18 des jeweiligen Ausgangs 17. Dies hat zur Folge, dass der erste Thyristor 61 in seinen leitenden Zustand umgeschaltet wird. Dadurch kann ein Strom durch die Sicherung 52 fließen, der ausreichend groß ist, so dass die Sicherung 52 auslöst und die Verbindung zwischen dem zweiten Knoten 51 und dem ersten Eingangsanschluss 12 unterbricht. Dies hat wiederum zur Folge, dass aufgrund der Verbindung zwischen dem Gate des Feldeffekttransistors 47 über die erste Diode 56 ein schnelles Umschalten des Feldeffekttransistors 47 in den sperrenden Zustand erfolgt. Die erste Diode 56 beschleunigt diesen Umschaltvorgang und könnte bei einem vereinfachten Beispiel auch entfallen.

Die steuerbare zweite Zenerdiode 66 ist charakteristisch für den Stromgrenzwert. Nimmt der Strom zu, so steigt die an der Widerstandsanordnung 59 anliegende Messspannung und mithin auch die Spannung am jeweiligen siebten Widerstand 68 zum Steuereingang der steuerbaren zweiten Zenerdiode 66. Wird der Stromgrenzwert überschritten, wird die steuerbare zweite Zenerdiode 66 in den leitenden Zustand umgeschaltet. Dies führt dazu, dass die Basis des zweiten Transistors 57 mit dem zweiten Eingangsanschluss 13 verbunden wird, wodurch der zweite Transistor 57 und der erste Thyristor 61 leitend werden. Der dadurch verursachte höhere Strom durch die Sicherung 52 führt dazu, dass die Sicherung 52 auslöst. Wie bei Überschreiten des Spannungsgrenzwertes hat dies dann wiederum zur Folge, dass das Gate des Feldeffekttransistors 47 über die erste Diode 56 mit dem dritten Knoten 60 verbunden wird und der Feldeffekttransistor 47 in seinen sperrenden Zustand umgeschaltet wird.

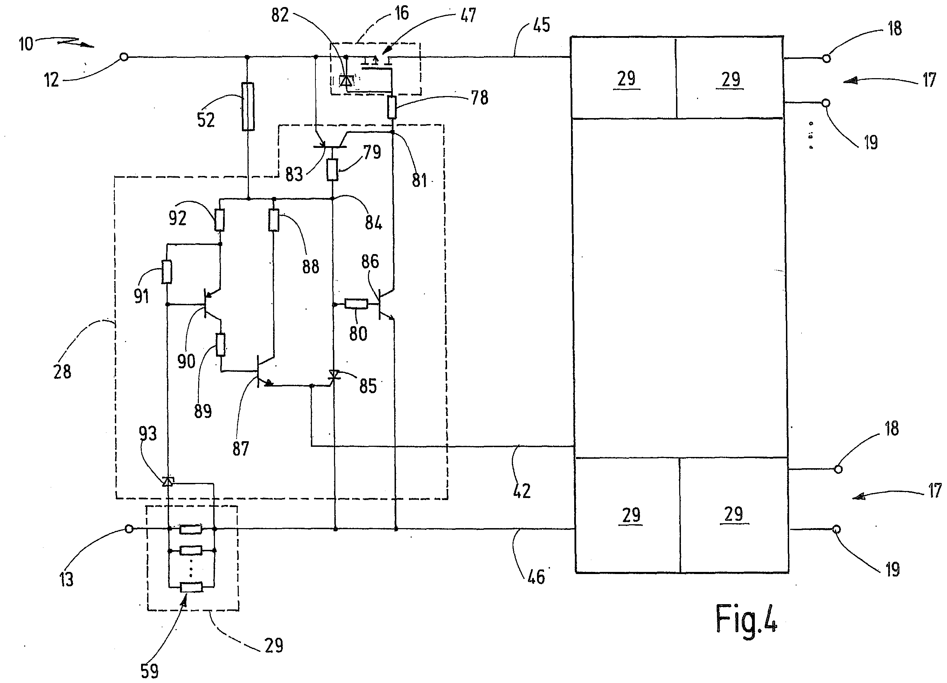

In Figur 4 ist ein weiteres Beispiel eines Moduls 10 veranschaulicht, das für eine explosionsgeschützte Leuchte 22 verwendet werden kann. Die Beschaltung der Ausgänge 17 mit den jeweils redundanten Spannungsüberwachungsschaltungen 29 entspricht dem Beispiel nach Figur 3 und ist in Figur 4 lediglich blockschaltbildartig vereinfacht dargestellt. In Figur 4 sind beispielhaft auch lediglich der erste Ausgang 17 und der letzte Ausgang 17 der Reihenschaltung gezeigt. Die redundante Ausführung der Spannungsüberwachungsschaltung 29 sowie der Ansteuerschaltung 28 wurde der Übersichtlichkeit halber weggelassen.

Der Feldeffekttransistor 47 des Sicherheitsschalters 16 ist bei diesem Beispiel durch einen p-Kanal-MOSFET gebildet und in die erste Versorgungsleitung 45 eingesetzt. Das Gate des Feldeffekttransistors 47 ist über einen neunten Widerstand 78 mit einem vierten Knoten 81 und mit der Anode einer fünften Zenerdiode 82 verbunden, deren Kathode mit dem ersten Eingangsanschluss 12 verbunden ist. Der erste Eingangsanschluss 12 ist außerdem mit einem Emitter eines dritten Transistors 83 verbunden, der als pnp-Bipolartransistor ausgeführt ist. Der Kollektor des dritten Transistors 83 ist mit dem vierten Knoten 81 verbunden. Die Basis des dritten Transistors 83 ist über einen zehnten Widerstand 79 mit einem fünften Knoten 84 verbunden. Der fünfte Knoten 84 ist über einen zweiten Thyristor 85 mit der zweiten Versorgungsleitung 46 verbunden. Außerdem ist eine Basis eines vierten Transistors 86 über einen elften Widerstand 80 an den fünften Knoten 84 angeschlossen, der durch einen npn-Bipolartransistor gebildet ist. Der Kollektor dieses vierten Transistors 86 ist mit dem vierten Knoten 81 verbunden, während der Emitter mit der zweiten Versorgungsleitung 46 verbunden ist.

Die erste Steuerleitung 42 ist mit dem Steuereingang des zweiten Thyristors 85 und einem Emitter eines fünften Transistors 87 verbunden, der als npn-Bipolartransistor ausgeführt ist. Der Kollektor des fünften Transistors 87 ist über einen zwölften Widerstand 88 mit dem fünften Knoten 84 verbunden. Die Basis des fünften Transistors 87 ist über einen dreizehnten Widerstand 89 mit dem Kollektor eines sechsten Transistors 90 verbunden. Der sechste Transistor 90 ist als pnp-Transistor ausgeführt, dessen Basis über eine vierzehnten Widerstand 91 und einen fünfzehnten Widerstand 92 mit dem fünften Knoten 84 verbunden ist. Der Verbindungspunkt zwischen dem vierzehnten Widerstand 91 und dem fünfzehnten Widerstand 92 ist mit dem Emitter des sechsten Transistors 90 verbunden. Die Basis des sechsten Transistors 90 ist außerdem über eine steuerbare sechste Zenerdiode 93 mit dem zweiten Eingangsanschluss 13 verbunden, wobei die Anode dem zweiten Eingangsanschluss 13 und die Kathode der Basis des sechsten Transistors 90 zugeordnet ist.

Der Steuereingang der steuerbaren sechsten Zenerdiode 93 ist über die Widerstandsanordnung 59 mit dem zweiten Eingangsanschluss 13 verbunden. Die Widerstandsanordnung 59 ist dadurch zwischen die Anode und den Steueranschluss der steuerbaren sechsten Zenerdiode 93 geschaltet.

Solange weder ein Spannungsgrenzwert, noch ein Stromgrenzwert überschritten werden, ist der Feldeffekttransistor 47 leitend. Dies wird dadurch erreicht, dass der vierte Transistor 86 über die Verbindung der Sicherung 52 mit dem ersten Eingangsanschluss 12 in seinem leitenden Zustand gehalten wird und dadurch das Gate des Feldeffekttransistors 47 ein wesentlich geringeres Potential aufweist als der Source-Anschluss.

Wenn ein Spannungsgrenzwert überschritten wird, erfolgt durch eine entsprechende Verbindung des betreffenden Ausgangsanschlusses 18 mit der ersten Steuerleitung 42 ein Umschalten des zweiten Thyristors 85 in seinen leitenden Zustand. Der Strom durch die Sicherung 52 führt wiederum dazu, dass die Sicherung 52 die Verbindung zwischen dem fünften Knoten 84 und dem Eingangsanschluss 12 trennt. Der dritte Transistor 83 wird leitend, während der vierte Transistor 86 in seinen sperrenden Zustand übergeht. Durch die Verbindung des vierten Knotens 81 und mithin des Gates mit dem ersten Eingangsanschluss 12 wird der Feldeffekttransistor 47 sicher in seinem sperrenden Zustand gehalten.

Wenn an der Widerstandsanordnung 59 aufgrund eines zu großen Ausgangsstromes IA eine Messspannung anliegt, die größer ist als ein Stromgrenzwert, wird die sechste Zenerdiode 93 leitend. Dies führt dazu, dass der sechste Transistor 90 sowie als Folge davon der fünfte Transistor 87 in den leitenden Zustand umgeschaltet werden und den Thyristor 85 durch ein entsprechendes Signal in den leitenden Zustand umschalten. Analog zur vorstehenden Beschreibung wird dann der dritte Transistor 83 leitend und die Sicherung 52 trennt die Verbindung zwischen dem fünften Knoten 84 und dem ersten Eingangsanschluss 12. Der Feldeffekttransistor 47 geht somit in seinen sperrenden Zustand über. Auch der vierte Transistor 86 wird dadurch sperrend.

Die im Zusammenhang mit der ersten Steuerleitung 42 beschriebene Ansteuerschaltung 28 sowie der dadurch angesteuerte Sicherheitsschalter 16 können - wie bereits erläutert - redundant vorgesehen sein, um die Sicherheit des Moduls 10 zu erhöhen.

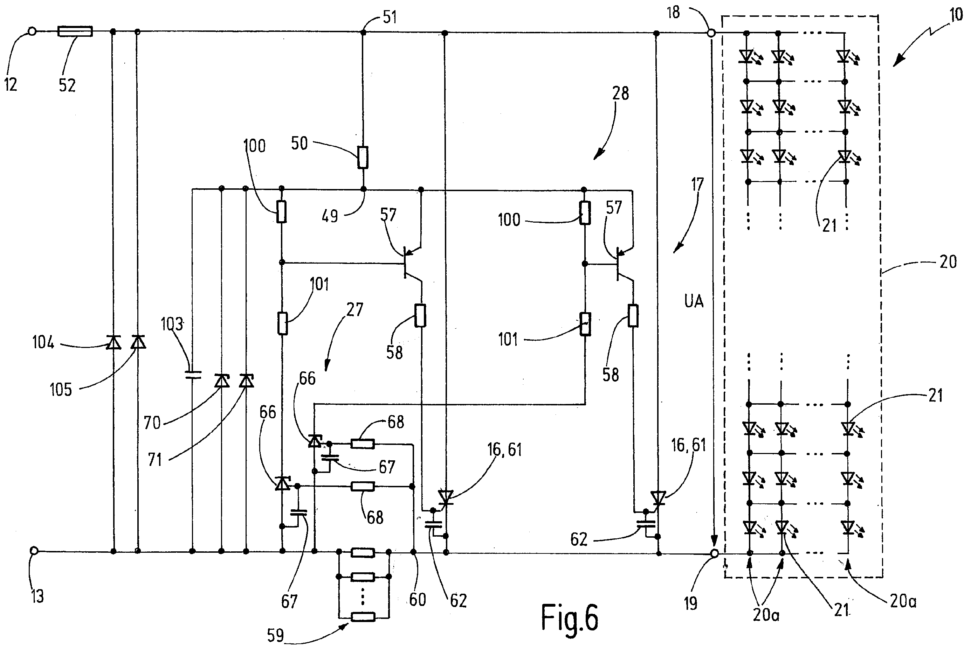

In Figur 6 ist ein Ausführungsbeispiel des Moduls 10 veranschaulicht. Dieses Ausführungsbeispiel ist ähnlich aufgebaut, wie das Beispiel des Moduls 10 gemäß Figur 3. Allerdings ist lediglich ein einziger Ausgang 17 vorhanden, dem keine Spannungsüberwachungseinrichtung 29 zugeordnet ist. Die dort anliegende Ausgangsspannung UA wird somit nicht überwacht. Dem Ausgang 17 ist lediglich wenigstens eine Stromüberwachungsschaltung 27 zugeordnet, die beispielsgemäß analog zu Figur 3 redundant ausgeführt ist.

Der Hauptunterschied gegenüber der Ausführung nach Figur 3 besteht darin, dass die redundant vorhandenen Sicherheitsschalter 16 parallel zum Ausgang 17 des Moduls 10 geschaltet sind und im Sicherheitszustand leiten. In diesem Sicherheitszustand wird ein Strompfad zwischen dem ersten Ausgangsanschluss 18 und dem zweiten Ausgangsanschluss 19 freigegeben und die beiden Ausgangsanschlüsse 18, 19 niederohmig verbunden. Unter der niederohmigen Verbindung ist eine leitende Verbindung zu verstehen, wobei in dem Strompfad zwischen den Ausgangsanschlüssen 18, 19 lediglich eine an dem Sicherheitsschalter 16 anliegende Restspannung verbleibt. Diese Restspannung hängt von der Ausführungsform des Sicherheitsschalters 16 ab, der vorzugsweise durch einen Halbleiterschalter gebildet ist oder einen oder mehrere Halbleiterschalter aufweist. Bei dem Ausführungsbeispiel gemäß Figur 6 ist der Sicherheitsschalter 16 durch den ersten Thyristor 61 gebildet. In dem Strompfad zwischen den beiden Ausgangsanschlüssen 18, 19 sind beispielsgemäß keine weiteren Bauelemente in Reihe zu dem Sicherheitsschalter 16 bzw. dem ersten Thyristor 61 geschaltet.

Diese Ausführungsform des Moduls 10 (Figur 6) wird möglich, weil die Ausgangsspannung UA durch die Last 20 selbst eigensicher gestaltet wird. Die Last 20 weist mehrere parallel geschaltete Zweige 20a auf. Vorzugsweise sind wenigstens zwei oder wenigstens drei Zweige 20a parallel zueinander geschaltet. In jedem der Zweige 20a ist eine Reihenschaltung aus mehreren Bauelementen der Last 20 vorhanden, beispielsgemäß mehreren Leuchtdioden 21. Die Bauelemente bzw. Leuchtdioden 21 in jedem Zweig 20a sind in Reihe geschaltet. Bei dieser Ausgestaltung der Last 20 wird die Ausgangsspannung UA in jedem Zweig 20a auf die in Reihe geschalteten Bauelemente aufgeteilt. Selbst wenn eine Unterbrechung in einem Zweig 20a auftritt, findet diese Spannungsaufteilung in dem wenigstens einen parallel dazu geschalteten weiteren Zweig 20a statt, so dass die Ausgangsspannung UA auch dann auf mehrere Bauelemente bzw. Leuchtdioden 21 aufgeteilt wird, wenn einer der Zweige 20a unterbrochen ist.

Im Unterschied zur Ausführung gemäß Figur 3 ist die Sicherung 52 in Reihe zwischen dem ersten Eingangsanschluss 12 und dem ersten Ausgangsanschluss 18 und zwischen dem ersten Eingangsanschluss 12 und die Abzweigstellen der Strompfade geschaltet, die den Sicherheitsschalter 16 aufweisen.

Die Emitter des zweiten Transistors 57 jeder Ansteuerschaltung 28 sind mit dem ersten Knoten 49 verbunden. Zwischen dem ersten Knoten 49 und dem zweiten Knoten 51 ist der fünfte Widerstand 50 in Reihe geschaltet. Die die Sicherheitsschalter 16 aufweisenden redundanten Strompfade verbinden jeweils den zweiten Knoten 51 mit dem zweiten Ausgangsanschluss 19, wobei beispielsgemäß der Anodenanschluss des ersten Thyristors 61 mit dem zweiten Knoten 51 und der Kathodenanschluss mit dem zweiten Ausgangsanschluss 19 verbunden ist.

Ein weiterer Unterschied zu dem Beispiel gemäß Figur 3 besteht darin, dass beim Ausführungsbeispiel nach Figur 6 die Basis der beiden zweiten Transistoren jeweils über einen sechzehnten Widerstand 100 mit dem ersten Knoten 49 und über einen siebzehnten Widerstand 101 jeweils mit einer zugeordneten zweiten Zenerdiode 66 verbunden sind. Parallel zu der dritten und vierten Zenerdiode 70, 71 ist ein Kondensator 103 geschaltet, der in Reihe zwischen dem zweiten Eingangsanschluss 13 und dem ersten Knoten 49 geschaltet ist. Der zweite Eingangsanschluss 13 ist außerdem über eine zweite Diode 104 und eine dritte Diode 105 mit dem zweiten Knoten 51 verbunden, wobei jeweils die Kathode mit dem zweiten Knoten 51 und die Anode mit dem zweiten Eingangsanschluss 13 verbunden ist.

Das Ausführungsbeispiel gemäß Figur 6 arbeitet wie folgt:
Wie bereits erläutert, wird die Ausgangsspannung UA nicht überwacht. Lediglich die Überschreitung eines Ausgangsstromes IA wird durch die Stromüberwachungsschaltung 27 überwacht. Der durch die Last 20 fließende Ausgangsstrom IA ist proportional zu einer Messspannung an der Widerstandsanordnung 59. Überschreitet der Ausgangsstrom IA einen Stromgrenzwert, der durch die Zenerspannung der zweiten Zenerdiode 66 definiert ist, wird die zweite Zenerdiode 66 in den leitenden Zustand umgeschaltet. Die Basis des zweiten Transistors 57 der jeweiligen Ansteuerschaltung 28 wird über die leitende zweite Zenerdiode 66 und den siebzehnten Widerstand 101 mit dem zweiten Eingangsanschluss 13 verbunden. Dies hat zur Folge, dass der zweite Transistor 57 leitend wird und dadurch den Steueranschluss des Sicherheitsschalters 16 und im vorliegenden Fall des ersten Thyristors 61 ansteuert, wodurch der erste Thyristor 61 in seinen leitenden Zustand umgeschaltet wird. Damit wird der Strompfad über den Sicherheitsschalter 16 bzw. den ersten Thyristor 61 zwischen dem ersten Ausgangsanschluss 18 und dem zweiten Ausgangsanschluss 19 leitend bzw. freigegeben und die beiden Ausgangsanschlüsse 18, 19 niederohmig verbunden. Bei diesem Ausführungsbeispiel ist der Sicherheitsschalter 16 in seinem Sicherungszustand leitend. Zwischen den beiden Ausgangsanschlüssen 18, 19 fällt lediglich eine Bauart bedingt am Sicherheitsschalter 16 anliegende Restspannung ab, die bei einem durch den ersten Thyristor 61 gebildeten Sicherheitsschalter 16 etwa 2 V oder weniger betragen kann. Dadurch wird die Ausgangsleistung am Ausgang 17 zumindest reduziert. Beim Ausführungsbeispiel führt dies dazu, dass kein Ausgangsstrom IA durch die Last 20 fließt, weil die dort in Reihe geschalteten Leuchtdioden 21 aufgrund der geringen Ausgangsspannung UA sperren.

Vorzugsweise wird die Zenerspannung der zweiten Zenerdiode 66 derart gewählt, dass der Sicherheitsschalter 16 in seinen leitenden Sicherheitszustand umgeschaltet wird, bevor die Sicherung 52 auslöst.

Nachdem der Sicherheitsschalter 16 in seinen Sicherheitszustand (hier: leitender Zustand) umgeschaltet wurde, kann der Strom durch die Sicherung 52 ansteigen und diese auslösen, wodurch ein weiterer Stromfluss unterbrochen und die Ausgangsspannung UA auf Null reduziert wird.

Die zweite Diode 104 und die dritte Diode 105 sind beim Ausführungsbeispiel nach Figur 6 optional. Sie verhindern ein versehentliches falsches Anschließen des Moduls 10 an eine Strom- oder Spannungsquelle 14, 15. Wird der zweite Eingangsanschluss 13 mit dem höheren Potential der Energiequelle verbunden, wird über die Dioden 104, 105 eine leitende Verbindung mit dem ersten Ausgangsanschluss 12 hergestellt und die Sicherung 52 löst wegen des dadurch entstehenden Kurzschlusses aus.

Über die dritte Zenerdiode 70, die vierte Zenerdiode 71 und den optional vorhandenen Kondensator 103 kann die Spannung am ersten Knoten analog zum Beispiel nach Figur 3 eingestellt werden.

Das in Figur 6 dargestellte Ausführungsbeispiel kann auch mit den Ausführungen der Ansteuerschaltung 28 und/oder zusätzlichen Sicherheitsschaltern 16 kombiniert werden, wie sie beim Beispiel in Figur 3 vorgesehen sind. Es ist daher möglich, zusätzlich oder alternativ zu den parallel zum Ausgang 17 angeordneten Sicherheitsschaltern 16, die Sicherheitsschalter 16 gemäß Figur 3 in Reihe zu dem Ausgang 17 anzuordnen. Es ist beispielsweise auch möglich, die Spannungsüberwachungseinrichtungen 29 beim Beispiel nach Figur 3 einfach entfallen zu lassen, wenn an den wenigstens einen Ausgang 17 eine Last 20 angeschlossen wird, wie sie in Figur 6 veranschaulicht ist.

Solange in der vorstehenden Beschreibung nichts anderes erwähnt ist, handelt es sich bei den Widerständen um ohmsche Widerstände. Ein in dem Schaltbild gezeigte ohmscher Widerstand kann bei einer konkreten Schaltungsrealisierung durch mehrere in Reihe und/oder parallelgeschaltete Widerstandsbauelemente aufgebaut werden. Abhängig von der konkreten Dimensionierung können zusätzliche ohmsche Widerstände erforderlich sein, um Ströme zu begrenzen oder Potentialunterschiede zwischen zwei Knotenpunkten zu bewirken. An der grundsätzlich beschriebenen Funktionsweise ändert sich dadurch nichts.

Die Erfindung betrifft ein Modul 10 für eine explosionsgeschützte Leuchte 22 oder für eine andere explosionsgeschützte elektrische Einrichtung. Das Modul 10 ist dazu eingerichtet, eine nicht eigensichere Eingangsleistung an einem Eingang 11 in jeweils eine eigensichere Ausgangsleistung an einem oder mehreren Ausgängen 17 umzuwandeln. An jeden vorhandenen Ausgang 17 ist dabei eine entsprechende elektrische Last, beispielsweise eine Leuchtdiodenanordnung aus wenigstens einer Leuchtdiode 21 anschließbar bzw. angeschlossen.

Sind mehrere Ausgänge 17 vorhanden, können diese zwischen einem ersten Eingangsanschluss 12 und einem zweiten Eingangsanschluss 13 des Eingangs 11 parallel oder in Reihe geschaltet sein. Wenigstens eine Stromüberwachungsschaltung 27 überwacht einen Ausgangsstrom IA. Optional kann wenigstens eine Spannungsüberwachungseinrichtung 29 eine Ausgangsspannung UA überwachen. Sobald eine Ausgangsspannung UA einen Spannungsgrenzwert überschreitet und/oder sobald ein Ausgangsstrom IA einen Stromgrenzwert überschreitet, wird mittels einer Ansteuerschaltung 28 ein Sicherheitsschalter 16 in seinen Sicherheitszustand umgeschaltet. Der Sicherheitsschalter 16 kann in der elektrischen Verbindung zwischen dem ersten Eingangsanschluss 12 und dem zweiten Eingangsanschluss 13 des Moduls 10 angeordnet sein und im Sicherheitszustand sperren. Der Sicherheitsschalter 16 kann auch parallel zu einem oder mehreren zugeordneten Ausgängen 17 angeordnet sein und im Sicherheitszustand leiten und einen Strompfad parallel zu dem wenigstens einen zugeordneten Ausgang 17 freigeben. Der Sicherheitsschalter 16 weist vorzugsweise einen Feldeffekttransistor 47, beispielsweise einen MOSFET, oder einen Thyristor 61 auf oder ist durch einen Feldeffekttransistor 47 oder Thyristor 61 gebildet.

### Bezugszeichenliste:

- 10: Modul
- 11: Eingang
- 12: erster Eingangsanschluss
- 13: zweiter Eingangsanschluss
- 14: Stromquelle
- 15: Spannungsquelle
- 16: Sicherheitsschalter
- 17: Ausgang
- 18: erster Ausgangsanschluss
- 19: zweiter Ausgangsanschluss
- 20: Last
- 21: Leuchtdiode
- 22: Leuchte
- 23: Leuchtengehäuse
- 24: Anschlussstecker

- 26: Überbrückungselement
- 27: Stromüberwachungsschaltung
- 28: Ansteuerschaltung
- 29: Spannungsüberwachungsschaltung

- 35: erster Spannungsteilerwiderstand
- 36: zweiter Spannungsteilerwiderstand
- 37: erste Zenerdiode
- 38: erster Widerstand
- 39: zweiter Widerstand
- 40: erster Transistor
- 41: dritter Widerstand
- 42: erste Steuerleitung
- 43: zweite Steuerleitung
- 45: erste Verbindungsleitung
- 46: zweite Verbindungsleitung
- 47: Feldeffekttransistor
- 48: vierter Widerstand
- 49: erster Knoten
- 50: fünfter Widerstand
- 51: zweiter Knoten
- 52: Sicherung

- 56: erste Diode
- 57: zweiter Transistor
- 58: sechster Widerstand
- 59: Widerstandsanordnung
- 60: dritter Knoten
- 61: erster Thyristor
- 62: erster Stützkondensator

- 66: zweite Zenerdiode
- 67: zweiter Stützkondensator
- 68: siebter Widerstand
- 69: achter Widerstand
- 70: dritte Zenerdiode
- 71: vierte Zenerdiode

- 78: neunter Widerstand
- 79: zehnter Widerstand
- 80: elfter Widerstand
- 81: vierter Knoten
- 82: fünfte Zenerdiode
- 83: dritter Transistor
- 84: fünfter Knoten
- 85: zweiter Thyristor
- 86: vierter Transistor
- 87: fünfter Transistor
- 88: zwölfter Widerstand
- 89: dreizehnter Widerstand
- 90: sechster Transistor
- 91: vierzehnter Widerstand
- 92: fünfzehnter Widerstand
- 93: sechste Zenerdiode

- 100: sechzehnter Widerstand
- 101: siebzehnter Widerstand
- 103: Kondensator
- 104: zweite Diode
- 105: dritte Diode

- IA: Ausgangsstrom
- IE: Eingangsstrom
- UA: Ausgangsspannung
- UE: Eingangsspannung
- SI: Stromüberwachungssignal
- SU: Spannungsüberwachungssignal
- ST: Ansteuersignal

## Patentansprüche

1. Anordnung aus einem Modul (10) zur Bereitstellung einer eigensicheren elektrischen Ausgangsleistung und einer elektrischen Last (20), der die Ausgangsleistung bereitgestellt wird,
mit einem einen ersten Eingangsanschluss (12) und einem zweiten Eingangsanschluss (13) aufweisenden Eingang (11), an den eine Stromquelle (14) oder Spannungsquelle (15) anschließbar ist, die an dem Eingang (11) eine nicht eigensichere Eingangsleistung bereitstellt,
mit einem einzigen Ausgang (17), der jeweils einen ersten Ausgangsanschluss (18) und einen zweiten Ausgangsanschluss (19) aufweist, zwischen denen eine elektrische Last (20) angeschlossen ist, die mehrere parallel geschaltete Zweige (20a) mit jeweils einer Reihenschaltung aus mehreren Bauelementen der Last (20) aufweist, wobei die Anzahl der Bauelemente in jedem Zweig (20a) gleich groß ist und die Zweige (20a) zwischen zwei in Reihe geschalteten Bauelementen elektrisch kurzgeschlossen sind, so dass die Bauelemente in den parallelgeschalteten Zweigen(20a), die an der gleichen Position der jeweiligen Reihenschaltung angeordnet sind, ebenfalls parallel geschaltet sind, wobei dem Ausgang (17) keine Spannungsüberwachungseinrichtung zugeordnet ist, so dass eine am Ausgang (17) anliegende Ausgangsspannung (UA) nicht überwacht wird und die Ausgangsspannung (UA) durch die Last selbst eigensicher gemacht wird,
mit einer Stromüberwachungsschaltung (27), die den durch die Last (20) fließenden Ausgangsstrom (IA) erfasst und mit einem Stromgrenzwert vergleicht,
mit wenigstens einem ansteuerbaren Sicherheitsschalter (16), der entweder in einer elektrischen Verbindung zwischen einem der beiden Eingangsanschlüsse (12, 13) und dem Ausgang (17) oder der parallel zum Ausgang (17) angeordnet ist,
und mit wenigstens einer Ansteuerschaltung (28), die mit der wenigstens einen Stromüberwachungsschaltung (27) verbunden und dazu eingerichtet ist, den ansteuerbaren Sicherheitsschalter (16) in einen Sicherheitszustand umzuschalten, wenn der Ausgangsstrom (IA) den Stromgrenzwert überschreitet, wobei der Sicherheitsschalter (16) im Sicherheitszustand die elektrische Ausgangsleistung am Ausgang (17) reduziert.

2. Anordnung nach einem der vorhergehenden Ansprüche,
**dadurch gekennzeichnet, dass** zwei Strompfade mit jeweils einem Sicherheitsschalter (16) in Reihe zueinander oder parallel zueinander geschaltet sind, wobei die Sicherheitsschalter (16) jeweils durch eine separate Ansteuerschaltung (28) angesteuert werden.

3. Anordnung nach einem der vorhergehenden Ansprüche,
**dadurch gekennzeichnet, dass** die Stromüberwachungsschaltung (27) redundant vorhanden ist.

4. Anordnung nach Anspruch 2 und 3,
**dadurch gekennzeichnet, dass** jede Ansteuerschaltung (28) mit jeweils einer Stromüberwachungsschaltung (27) verbunden ist.

5. Anordnung nach einem der Ansprüche 2 bis 4,
**dadurch gekennzeichnet, dass** die Sicherheitsschalter (16) in jeweils einem Strompfad parallel zum Ausgang (17) geschaltet sind

6. Anordnung nach Anspruch 5,
**dadurch gekennzeichnet, dass** die Sicherheitsschalter (16) in einem Sicherheitszustand den Strompfad freigeben, so dass die Ausgangsanschlüsse (18, 19) niederohmig verbunden sind.

7. Anordnung nach einem der Ansprüche 2 bis 6,
**dadurch gekennzeichnet, dass** die Sicherheitsschalter (16) durch jeweils einen Thyristor (61) gebildet sind.

8. Anordnung nach einem der Ansprüche 2 bis 7,
**dadurch gekennzeichnet, dass** in jedem Strompfad außer dem Sicherheitsschalter (16) keine weiteren Bauelemente in Reihe dazu geschaltet sind.

9. Anordnung nach einem der Ansprüche 2 bis 8,
**dadurch gekennzeichnet, dass** in Reihe zwischen dem ersten Eingangsanschluss (12) und dem ersten Ausgangsanschluss (18) und zwischen dem ersten Eingangsanschluss (12) und den Abzweigstellen der Strompfade eine Sicherung (52) geschaltet ist.

10. Explosionsgeschützte Leuchte (22) aufweisend eine Anordnung nach einem der vorhergehenden Ansprüche, wobei die Bauelemente der Last (20) durch Leuchtdioden gebildet sind, wobei ein Leuchtengehäuse (23) der Leuchte (22) und/oder die Anordnung der Leuchtdioden (21) im Leuchtengehäuse (23) ohne zusätzliche mechanische Explosionsschutzmaßnahmen ausgeführt ist.

## Claims

1. Arrangement of a module (10) for providing an intrinsically safe electrical output power, and an electrical load (20) which provides the output power;
with an input (11) having a first input connection (12) and a second input connection (13), to which a current source (14) or voltage source (15) can be connected which provides a non-intrinsically safe input power at the input (11);
with a single output (17) having respectively a first output connection (18) and a second output connection (19), between which an electrical load (20) is connected which has several parallel-connected branches (20a) each having a series circuit of several components of the load (20), wherein the number of components in each branch (20a) is identical and the branches (20a) are electrically short-circuited between two series-connected components so that the components in the parallel-connected branches (20a) which are arranged at the same position in the respective series circuit are also connected in parallel, wherein no voltage monitoring device is assigned to the output (17) so that an output voltage (UA) present at the output (17) is not monitored and the output voltage (UA) is made intrinsically safe by the load itself, with a current monitoring circuit (27) which detects the output current (IA) flowing through the load (20) and compares this with a current limit value;
with at least one actuatable safety switch (16) which is arranged either in an electrical connection between one of the two input connections (12, 13) and the output (17), or parallel to the output (17);
and with at least one actuation circuit (28) which is connected to the at least one current monitoring circuit (27) and is configured to switch the actuatable safety switch (16) into a safety state when the output current (IA) exceeds the current threshold value, wherein the safety switch (16) in safety state reduces the electrical output power at the output (17).

2. Arrangement according to any of the preceding claims, **characterised in that** two current paths each with a safety switch (16) are connected in series with one another or parallel to one another, wherein the safety switches (16) are each actuated by a separate actuation circuit (28).

3. Arrangement according to any of the preceding claims, **characterised in that** the current monitoring circuit (27) is present redundantly.

4. Arrangement according to claim 2 and 3, **characterised in that** each actuation circuit (28) is connected to a respective current monitoring circuit (27).

5. Arrangement according to any of claims 2 to 4, **characterised in that** the safety switches (16) are each connected parallel to the output (17) in a respective current path.

6. Arrangement according to claim 5, **characterised in that** the safety switches (16) in a safety state open the current path so that the output connections (18, 19) are connected with low ohmic resistance.

7. Arrangement according to any of claims 2 to 6, **characterised in that** the safety switches (16) are each formed by a thyristor (61).

8. Arrangement according to any of claims 2 to 7, **characterised in that** no further components except the safety switch (16) are connected in series in each current path.

9. Arrangement according to any of claims 2 to 8, **characterised in that** a fuse (52) is connected in series between the first input connection (12) and the first output connection (18), and between the first input connection (12) and the branch points of the current paths.

10. Explosion-proof luminaire (22) having an arrangement according to any of the preceding claims, wherein the components of the load (20) are formed by light-emitting diodes, wherein a luminaire housing (23) of the luminaire (22) and/or the arrangement of the light-emitting diodes (21) in the luminaire housing (23) are configured without additional mechanical explosion-protection measures.

## Revendications

1. Ensemble constitué d'un module (10), destiné à fournir une puissance de sortie électrique à sécurité intrinsèque, et d'un consommateur électrique (20), auquel est délivrée la puissance de sortie,
comprenant une entrée (11), présentant une première borne d'entrée (12) et une deuxième borne d'entrée (13), à laquelle peut être raccordée une source de courant (14) ou une source de tension (15), qui fournit à l'entrée (11) une puissance d'entrée sans sécurité intrinsèque,
comprenant une sortie unique (17) qui présente respectivement une première borne de sortie (18) et une deuxième borne de sortie (19), entre lesquelles est raccordé un consommateur électrique (20) qui comporte plusieurs branches (20a) reliées en parallèle et dotées chacune d'un montage en série de plusieurs composants du consommateur (20), le nombre de composants dans chaque branche (20a) étant identique, et les branches (20a) étant mises en court-circuit électrique entre deux composants montés en série, de sorte que dans les branches (20a) reliées en parallèle, les composants placés à la même position du montage en série respectif sont également montés en parallèle, la sortie (17) n'étant pas dotée d'un dispositif de surveillance de tension, de sorte qu'une tension de sortie (UA) appliquée à la sortie (17) n'est pas surveillée, et la tension de sortie (UA) est dotée d'une sécurité intrinsèque par le consommateur lui-même,
comprenant un circuit de surveillance de courant (27) qui mesure le courant de sortie (IA) traversant le consommateur (20) et le compare à une valeur limite de courant,
comprenant au moins un interrupteur de sécurité (16) susceptible d'être commandé, qui est disposé soit dans une liaison électrique entre l'une des deux bornes d'entrée (12, 13) et la sortie (17), soit parallèlement à la sortie (17),
et comprenant au moins un circuit de commande (28) qui est relié au circuit de surveillance de courant (27), au nombre d'au moins un, et est conçu pour faire passer l'interrupteur de sécurité (16), susceptible d'être commandé, dans un état de sécurité lorsque le courant de sortie (IA) dépasse la valeur limite de courant, l'interrupteur de sécurité (16), à l'état de sécurité, réduisant la puissance de sortie électrique à la sortie (17).

2. Ensemble selon l'une des revendications précédentes, **caractérisé en ce que** deux chemins de courant comportant chacun un interrupteur de sécurité (16) sont branchés en série l'un avec l'autre ou parallèlement l'un à l'autre, les interrupteurs de sécurité (16) étant activés respectivement par un circuit de commande (28) séparé.

3. Ensemble selon l'une des revendications précédentes, **caractérisé en ce que** le circuit de surveillance de courant (27) est redondant.

4. Ensemble selon les revendications 2 et 3, **caractérisé en ce que** chaque circuit de commande (28) est relié respectivement à un circuit de surveillance de courant (27).

5. Ensemble selon l'une des revendications 2 à 4, **caractérisé en ce que** les interrupteurs de sécurité (16), respectivement dans un chemin de courant, sont branchés en parallèle avec la sortie (17).

6. Ensemble selon la revendication 5, **caractérisé en ce que** dans un état de sécurité, les interrupteurs de sécurité (16) libèrent le chemin de courant, de sorte que les bornes de sortie (18, 19) sont reliées avec une faible valeur ohmique.

7. Ensemble selon l'une des revendications 2 à 6, **caractérisé en ce que** les interrupteurs de sécurité (16) sont constitués respectivement d'un thyristor (61).

8. Ensemble selon l'une des revendications 2 à 7, **caractérisé en ce que** dans chaque chemin de courant, aucun autre composant supplémentaire n'est branché en série en dehors de l'interrupteur de sécurité (16).

9. Ensemble selon l'une des revendications 2 à 8, **caractérisé en ce qu'**un fusible (52) est branché en série entre la première borne d'entrée (12) et la première borne de sortie (18) et entre la première borne d'entrée (12) et les points de dérivation des chemins de courant.

10. Luminaire antidéflagrant (22) présentant un ensemble selon l'une des revendications précédentes, dans lequel les composants du consommateur (20) sont constitués de diodes électroluminescentes, un boîtier de luminaire (23) du luminaire (22) et/ou l'ensemble de diodes électroluminescentes (21) dans le boîtier de luminaire (23) étant réalisés sans mesures antidéflagrantes mécaniques supplémentaires.
